# FASCICULE DE BREVET EUROPEEN

(11) **EP 4 225 650 B1**
(45) Date de publication et mention de la délivrance du brevet: **15.04.2026**
(21) Numéro de dépôt: 21777572.5
(22) Date de dépôt: 27.08.2021
(51) Int. Cl.: B64G 3/00, G02B 23/00, G01C 11/02

(54) **SYSTÈME DE DÉTECTION DE LA TRAJECTOIRE D'OBJETS MOBILES**
SYSTEM ZUR ERFASSUNG DES WEGES VON SICH BEWEGENDEN OBJEKTEN
SYSTEM FOR DETECTING THE PATH OF MOVING OBJECTS

(30) Priorité: 05.10.2020 FR 2010136
(43) Date de publication de la demande: 16.08.2023
(73) Titulaire: ALDORIA, 31000 Toulouse (FR)
(72) Inventeur: GIOLITO, Damien, 75019 PARIS (FR); LUCKEN, Romain, 75014 PARIS (FR)
(74) Mandataire: IP Trust
(86) Numéro de dépôt international: PCT/FR2021/051495
(87) Numéro de publication internationale: WO 2022/074306

(56) Documents cités:
- FR-A1- 2 962 411
- FR-A1- 3 018 612

## Description

Le domaine de l'invention concerne la détection d'objets mobiles (ci-après dénommé «mobiles») présents dans l'espace à basse et haute altitudes par des procédés optiques mettant en œuvre un ensemble de télescopes. Plus particulièrement, le domaine de l'invention concerne la détection de satellites et de débris spatiaux ainsi que des aéronefs ou tout mobile et le calcul de leur orbite et de leur trajectoire en vue de prévenir leur chute sur terre, une collision dans l'espace ou l'entrée dans une zone dangereuse.

Le document WO 2015/136102 A1 décrit selon son abrégé un procédé de détection optique de mobiles spatiaux comprenant une génération d'une pluralité de champs de vue au moyen d'un premier ensemble de télescopes, l'ensemble des champs de chaque télescope ayant une distribution spatiale s'inscrivant dans une couronne conique d'un plan défini de l'espace, appelé plan optique, ledit plan optique étant non parallèle à au moins l'un des axes optiques d'un télescope, ladite couronne conique ayant un diamètre définissant un champ large de détection.

Le procédé comprend aussi une étape de détection d'au moins une trace d'un mobile dans le champ d'au moins un télescope par un détecteur électronique, le temps de d'intégration du détecteur électronique étant défini pour obtenir un étalement de la trace sur plusieurs pixels pour une vitesse de défilement maximale donnée du mobile et une altitude minimale de son orbite. Le procédé comprend en outre une étape de dérivation d'une trajectoire de l'objet mobile.

La détection des débris orbitaux est très problématique. En effet, suivre un objet dont la taille peut être inférieure à la dizaine de centimètres, à plusieurs milliers de kilomètres de distance est une tâche ardue.

D'autre part, les objets ayant des trajectoires très différentes les unes des autres, il est très difficile pour des raisons économiques de couvrir la totalité de la voute céleste avec les capacités de détection adéquates.

L'Esa (agence spatiale européenne) a estimé le nombre d'objet comme les satellites inactifs, les restes de missions spatiales comme les coiffes des fusées par exemple, des corps de fusées et des petits fragments à :
- 5.400 débris spatiaux de plus d'un mètre
- 34.000 débris spatiaux de plus de 10 centimètres
- 900.000 débris spatiaux de plus d'un centimètre
- 130.000.000 débris spatiaux de plus d'un millimètre.

Actuellement, la surveillance de l'espace proche et notamment des objets présentant un danger potentiel qu'ils soient naturels ou artificiels est devenue un problème majeur pour assurer la sécurité et l'intégrité de toute cible éventuellement visée par une collision.

Cette surveillance concerne aussi bien celle de satellites en fin de vie ou incontrôlés que des débris provenant de collisions antérieures, ou astéroïdes ou comètes potentiellement dangereux pour la Terre.

Les agences spatiales et des opérateurs privés ont entamé différents programmes de surveillance regroupés sous la dénomination de « Space Situational Awareness ».

Même dans le cas où une météorite est de taille relativement petite, les risques induits par d'une chute restent importants. Il persiste donc un danger pour les populations et les infrastructures à la surface de la Terre pour tout mobile chutant dont la fragmentation dans l'atmosphère peut causer des dommages importants. Un des problèmes rencontrés est le recensement des petits corps du système solaire dont l'orbite coupe celle de la Terre et leur suivi afin d'évaluer leur dangerosité.

On recense de plus en plus d'objets artificiels dans les orbites basses ou élevées. L'encombrement spatial semble chaque année plus important dû à la présence de satellites de plus en plus nombreux, et à la multiplication de collisions catastrophiques entraînant une augmentation du nombre de débris. Le mauvais ou le non-suivi de leur trajectoire après leur fin de vie demeure un problème grandissant.

Les projections laissent supposer une situation dans laquelle l'accroissement de la population de débris de taille supérieure à 1 cm entraînera un contrôle et une surveillance de ces derniers de plus en plus difficiles à maintenir. Le seuil de 1cm correspondant à la taille d'un objet pouvant potentiellement rendre un satellite inopérationnel de manière partielle ou complète, eut égard aux vitesse mises en jeu : 3km/s en orbite géostationnaire jusqu'à 8km/s en orbite basse.

On appellera ces objets, des « débris » dans la suite du texte sachant que cette notion de débris englobe les débris proprement dits, des satellites opérationnels ou non, ou même des météorites.

Une première problématique concerne la chute de débris à la surface de la terre et une seconde problématique concerne la collision de débris entre eux ou avec des satellites actifs. La surveillance des débris dans l'espace, et plus particulièrement dans les orbites basses, permet de se prévenir de ces deux conséquences.

Enfin, la problématique de surveillance des différents mobiles de l'espace concerne également ceux, par extension, des mobiles discrets se déplaçant à très basse altitude telle que des aéronefs, par exemple des ULM ou des drones, pouvant définir un danger par exemple lorsque leur survol est effectué à proximité d'un site sensible, par exemple une centrale nucléaire.

Une difficulté est de trouver un système optique de grand champ permettant de couvrir différentes altitudes, lointaines et proches, et de suivre des objets à basses altitudes comportant des vitesses élevées et donc difficilement détectables.

En effet, un problème de la détection et de la surveillance de débris spatiaux, dont on ne connaît pas à priori l'orbite et/ou la trajectoire, est la prise en compte de l'intensité lumineuse de sources tierces qui perturbe les détections.

Ces sources peuvent provenir de la voûte céleste, du soleil, de la lune et des conditions météorologiques locales altérant la stabilité des conditions de prises de vue. Le système de surveillance doit pouvoir prendre en compte une multitude de conditions de luminosité permettant de maximaliser des détections en toute circonstance. La détection s'effectuant en considérant un point ou une zone de la surface du globe, la condition du champ de vue de l'observateur est une donnée extrêmement importante dans le calcul de la probabilité de détection d'un mobile et du calcul de sa trajectoire.

La problématique de surveillance des débris concerne différentes orbites à prendre en compte dans les méthodes de détection de mobiles de l'espace. En ce qui concerne les objets naturels tels que les météorites, leur orbite est généralement hélio centrée, ce qui signifie que les météorites peuvent potentiellement s'approcher de la Terre à n'importe quelle altitude et dans n'importe quelle direction. En ce qui concerne les objets artificiels, leur orbite terrestre peut être comprise dans différentes familles d'orbites.

La première famille d'orbites est connue sous l'acronyme LEO, désignant « Low Earth Orbit » dans la terminologie anglo-saxonne. Il s'agit d'une famille d'orbites basses allant jusqu'à 2000 km. Cette famille d'orbites est très occupée par des satellites de communications, militaires, détection, météorologiques, etc.

Une seconde famille d'orbites est connue sous l'acronyme GEO, désignant « Geostationary Orbit » qui comprend une orbite géostationnaire définie à 35784 km au-dessus de l'équateur. Une révolution d'un mobile à cette altitude est de 24h. Le mobile se situant à une orbite géostationnaire est fixe par rapport à une position terrestre. Cependant des débris peuvent quitter leur orbite et avoir des orbites défilantes. Cette orbite est très occupée par les satellites de communication (militaires ou civils), de télédétection, de météorologie, etc.

Une troisième famille d'orbites est plus connue sous l'acronyme MEO, désignant « Médium Earth Orbit » qui est une famille d'orbites moyenne, généralement elliptique. C'est le cas des satellites GNSS

Une quatrième famille d'orbites est désignée par l'acronyme HEO, dont les orbites très elliptiques comme par exemple les orbites Molniya ou Tundra qui permettent de communiquer ou de surveiller les régions de latitudes élevées.

Une cinquième famille d'orbites est désignée par l'acronyme GTO signifiant : « Geostationary Transfer Orbit ». Cette famille comprend des orbites elliptiques. Leur apogée est de l'ordre de 42000 km et leur périgée est de l'ordre de 650km. Cette famille d'orbites est très pratique pour injecter des satellites dans une orbite géostationnaire, elle est donc utilisée lors des lancements de satellites comme une orbite de transition pour une mise en orbite géostationnaire.

Aujourd'hui différentes méthodes de détection de débris spatiaux et de leur trajectoire existent.

Notamment, il existe une famille de méthodes dites « méthodes actives », notamment pour la détection de débris dans des orbites LEO. Les méthodes actives reposent sur un fonctionnement de type « radar » dans lequel un mobile est éclairé par une source émettrice d'un signal. Le signal est ensuite réfléchi et c'est la réflexion du signal qui informe un récepteur de données de positions du mobile.

Un premier inconvénient de cette méthode est que la puissance reçue varie comme 1/d⁴, où « d » est la distance du mobile à l'émetteur/récepteur. En conséquence, le flux reçu restera faible lors de la détection, même si une forte puissance d'émission est envisagée.

Un second inconvénient est l'installation relativement importante de système de type radar que cette méthode impose. Ces installations sont coûteuses et nécessitent une maintenance importante et sont facilement détectables. En outre, ces systèmes consomment beaucoup d'énergie et doivent en conséquence être installés près d'un réseau électrique.

Parmi les méthodes actives, il existe également les LIDAR qui reposent sur une illumination d'un mobile par un Laser. Cette méthode permet d'atteindre de meilleurs résultats que celles du radar en terme de puissance détectée car la lumière du laser est mieux focalisée. En revanche, les cônes de détection sont beaucoup plus faibles et sont peu adaptés aux détections « en aveugle » de mobiles situés à des orbites basses et elliptiques. Une autre famille de méthodes existe, ce sont les méthodes passives dans lesquelles les cibles ne sont pas éclairées par une source terrestre. En ce qui concerne les méthodes passives, le flux lumineux capté par un détecteur varie avec la distance « d » au mobile comme une fonction de 1/d^{"2} ce qui offre de meilleurs résultats que les méthodes actives sur le flux lumineux captés en provenance du mobile. En revanche, l'inconvénient majeur est la forte dépendance aux illuminations issues de sources externes comme le soleil, les étoiles ou la lune. L'avantage de ces solutions réside en leurs faibles coûts et dans la relative simplicité de leur mise en œuvre à partir de détecteurs reposant sur des instruments optiques capables de visualiser des objets de petites tailles à toutes les altitudes.

En ce qui concerne les mobiles de l'orbite géostationnaire, un télescope ou un radar ou tout autre moyen électromagnétique pourra détecter un point immobile sur un fond d'étoiles en mouvement pendant le temps de la pose. Avec un télescope de grand champ, il est alors possible de détecter des mobiles spatiaux sur une ceinture géostationnaire ainsi que leur trajectoire.

Dans le cas des autres orbites, dites « défilantes » donc non géostationnaires, c'est-à-dire non fixes vis-à-vis d'un point d'observation de la terre, il est difficile de détecter des mobiles spatiaux, leur hauteur, leur inclinaison, les différents nœuds de leur orbite, dont les nœuds ascendants et descendants.

Une difficulté provient de la vitesse de défilement des mobiles spatiaux qui peut dépasser 1 °/s au zénith pour une orbite basse. La détection se fait par la capture d'une trace (sur une suite d'image) vis-à-vis de traces ponctuelles ou de traînées en fonction du mouvement sidéral et donc de la fenêtre d'observation dans le ciel.

La méthode consiste alors à discriminer les traces, pour détecter la présence d'un débris spatial. Si l'inclinaison peut être éventuellement détectée en fonction de l'analyse de la trace laissée par le mobile, en revanche, il reste très difficile d'obtenir une vitesse de déplacement réelle du mobile du fait de l'inconnue de son altitude. De ce fait, il est difficile de déduire des éléments de sa trajectoire par une extrapolation des analyses des traces. Dans le cas général, il est nécessaire d'avoir trois mesures de position angulaire du mobile pour dériver son orbite. Deux mesures suffisent si le mobile est sur une orbite circulaire.

Le problème peut se résoudre en augmentant le champ d'un télescope pour augmenter les traces et leur nombre mais les images détectées, comme expliqué précédemment, peuvent devenir difficiles à analyser du fait de la complexité des télescopes à mettre en œuvre, de la pollution lumineuse environnante, de la confusion forte provoquée par l'ensemble des objets du champ, et de la très grande taille des capteurs nécessaires.

Par ailleurs, la construction d'un télescope au large champ n'est guère envisageable au-delà de quelques degrés, contrairement aux objectifs photographiques

En effet, une optique de grand champ permet de déduire des informations quant à la trajectoire du mobile ; en revanche, un grand champ est plus susceptible d'être affecté par des sources de lumières parasites. En outre, il reste très difficile de concevoir des télescopes de grands champs sans rencontrer des problèmes de conception, de complexité de schéma optique spécifique. La présence d'un grand plan focal entraine également de nombreuses aberrations. Lorsqu'un détecteur électronique est couplé à une optique de grand champ, il doit être de très grande taille ; les tailles et le nombre de pixels peuvent être très grands et les coûts de conception sont importants et l'exploitation est difficile.

### État de la technique

Il existe des systèmes de télescopes permettant d'obtenir de très grand champ en couplant une matrice de télescopes de grand champ formant un champ unique comme le propose la société ASTRIUM, notamment avec la solution décrite dans le document de brevet WO2012/007361. Ce brevet décrit un système optique pour système de veille spatiale caractérisé en ce qu'il comporte une matrice de NxP télescopes chacun à champ supérieur ou égal à 5° et préférablement supérieur ou égal à 10°, lesdits télescopes étant couplés à NxP capteurs d'images de sensibilité adaptée à un temps d'intégration de l'ordre de grandeur de 10 à 100 millisecondes, les télescopes étant montés sur une ou plusieurs montures motorisées, les télescopes étant asservis ensemble et regroupés de manière à fonctionner simultanément pour offrir un champ large et en ce que la vitesse de déplacement des montures des télescopes est telle que chaque objet traversant la zone balayée est détecté au moins trois fois en sorte d'obtenir au minimum 3 mesures de position datées réparties sur l'arc de transit de l'objet dans la zone de ciel, le temps de pose ou temps d'intégration étant défini pour obtenir un étalement du signal sur plusieurs pixels.

Un inconvénient de cette solution est le coût d'un tel système qui nécessite de nombreux télescopes de très grand champ. Une solution est de réduire le nombre de télescopes et d'associer un système de suivi motorisé avec des télescopes de champs plus larges ayant au moins un champ de 5°, et en pratique 14° dans l'exemple cité dans le document de brevet (10° x 10° sur le détecteur carré).

Le brevet FR2962556 décrit un système optique pour système de veille pour système de veille spatiale caractérisé en ce qu'il comporte au moins un télescope à champ supérieur ou égal à 5 ° et préférablement supérieur ou égal à 10° monté sur une monture mobile selon deux axes, ledit télescope étant couplé à un capteur d'images de sensibilité adaptée à un temps d'intégration de l'ordre de grandeur de la milliseconde.

Cette solution nécessite l'utilisation de télescopes à grands champs dont le grossissement est modeste et insuffisant pour prendre en compte des objets mobiles de très petite dimension.

Le brevet FR2962411 propose une autre solution pour la système de veille spatiale dans des zones LEO de l'orbite terrestre comportant une étape de disposition et de mise en réseau de stations de systèmes optiques de veille sur la surface du globe selon un maillage adapté pour offrir un cycle efficace journalier du système de 24h et une durée de revisite choisie de la zone LEO observée, où on définit pour ledit maillage un positionnement en latitude des systèmes optiques selon des latitudes privilégiées à partir des types d'orbite à surveiller, et on prévoit:
- des sites de latitudes élevées >50° Nord ou Sud,
- des sites des latitudes moyennes entre 30° et 50° Nord ou Sud,
- des sites de latitudes inférieures à 30° proches des tropiques et subtropicales,
- une sélection de sites offrant un espacement en longitude de 20° ou moins.
On réalise la disposition et la mise en réseau des systèmes optiques de veille sur la surface du globe selon les étapes suivantes :
- on définit un positionnement en longitude des systèmes optiques à partir d'un calcul au moyen d'un ordinateur des durées de revisite de chaque point du globe,
- on optimise la disposition des systèmes optiques selon une analyse par calculateur des conditions statistiques météo au niveau des intersections desdites latitudes et longitudes pour obtenir une durée maximale de revisite du système au plus égale à une semaine,
- on dispose les systèmes optiques aux noeuds du maillage constitué selon lesdits positionnements en latitude et en longitude selon un pas adapté à respecter ladite durée maximale de revisite.

Le brevet français FR3018612 décrit une autre solution connue de détection d'un mobile dans l'espace caractérisé en ce qu'il comprend :
- une génération d'une pluralité de champs de vue (Zkp) au moyen d'un premier ensemble de télescopes (T ), chaque télescope définissant un télescope de détection, l'ensemble des champs (FOV ) de chaque télescope (Ty) ayant une distribution spatiale dans au moins un plan de l'espace s'inscrivant dans une forme géométrique ouverte (CC), ladite forme géométrique ouverte (CC) définissant un champ large de détection ;
- une détection d'au moins une trace d'un mobile (M-i) dans le champ (FOVy) d'au moins un télescope (Ty) par un détecteur électronique couplé à chaque télescope (Ty), le temps d'intégration du détecteur électronique étant défini pour obtenir un étalement de la trace sur plusieurs pixels du détecteur électronique pour une vitesse de défilement maximale (VM) donnée d'un mobile et une altitude minimale de son orbite ;
- une déduction d'une trajectoire (TJSAT) du mobile (M-i) dans le plan image dudit télescope (Ty).

### Solution apportée par l'invention

Afin de maîtriser ces risques, il est primordial de cataloguer l'ensemble des débris potentiellement dangereux et de leur associer des paramètres orbitaux valides qui permettent de décrire leurs trajectoires. Observés depuis un point fixe sur la Terre, les objets en orbite basse présentent comme caractéristiques de défiler rapidement sur la voute céleste. En outre, à chaque instant plusieurs objets traversent la voute céleste en plusieurs endroits. Selon ses paramètres orbitaux chaque objet traverse la voute céleste locale à intervalles temporels plus ou moins réguliers, allant de quelques dizaines de minutes à plusieurs heures.

A cet effet, l'invention concerne selon son acception la plus générale un système de détection de la trajectoire d'objets mobiles présentant les caractéristiques énoncées par la revendication 1.

Le système de détection de la trajectoire d'objets mobiles comporte :
- Un premier réseau de N1 télescopes ayant chacun un angle de champ de M1 degrés, orientés pour couvrir un arc de C° dans un plan P1, M1 étant compris entre 1 et 4°, N1 étant supérieur à C/M1, les angles de visés ALPHAN1 de chacun desdits télescopes étant dans un plan P1
- Au moins un deuxième réseau de N2 télescopes ayant chacun un angle de champ de M2 degrés, orientés pour couvrir un arc de C° dans un plan P2, M2 étant compris entre 1 et 4°, N2 étant supérieur à C/M1, les angles de visés ALPHAN1 de chacun desdits télescopes étant dans un plan P2 perpendiculaire à P1 comprenant l'axe de visée d'un objet stellaire de référence
- L'orientation desdits télescopes étant pilotée pour maintenir l'intersection entre les plans P1 et P2 étant dans l'axe dudit objet de référence
- Au moins un troisième réseau de N3 télescopes, ayant chacun un angle de champ d'au moins M3 degrés, orientés pour couvrir un segment conique de 360° avec une élévation E3 comprise entre (180 - C)/2°, M3 étant compris entre 1 et 4°, N3 étant supérieur à 360/M3
- Chacun des télescopes étant muni d'un capteur photosensible délivrant périodiquement une image I
- Le système comprenant en outre un calculateur exécutant
   ∘ pour chacune desdites images I un traitement de reconnaissance les coordonnées d'un segment Sᵢ (T, H, CS) correspondant à un déplacement d'un objet dans le champ du télescope T correspondant, où la variable H désigne l'horodatage de l'image et C désigne les cordonnées dudit segment dans ladite image
   ∘ un traitement appliqué sur l'ensemble desdits segments enregistrés pour estimer les trajectoires desdits objets.

### Description détaillée d'un exemple non limitatif de réalisation

La présente invention sera mieux comprise à la lecture de la description qui suit, concernant un exemple de réalisation non limitatif illustré par les dessins annexés où :

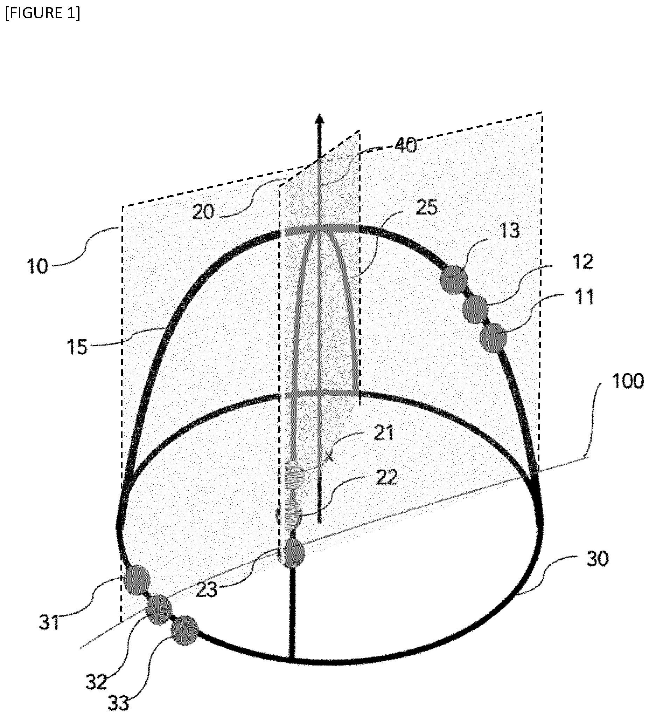

[FIGURE 1] la figure 1 représente une vue schématique d'une installation selon l'invention

### Implantation des télescopes

La figure 1 représente une vue schématique de l'implantation des télescopes.

L'invention met en œuvre une pluralité de télescopes sur un site géographique adaptée, répondant à des critères favorables à une observation stellaire :
- climat aride garantissant une faible couverture nuageuse
- altitude permet d'avoir une agitation atmosphérique réduite
- proximité de la mer assurant une différence thermique entre le sol et l'atmosphère minimale
- isolation géographique permettant de ne pas être dérangé par les activités humaines, notamment en ce qui concerne les lumières et les nuages de pollution.

Les télescopes présentent un champ de vue important, d'environ 3° pour permettre une observation selon un angle solide de l'ordre de 10 degrés carrés. Il s'agit par exemple d'un télescope de Schmidt. Chaque télescope est équipé d'un capteur photosensible, par exemple un capteur à accumulation présentant une matrice de pixels permettant de mesurer le nombre de pixels accumulés sur chaque pixel pendant une période d'acquisition.

Les télescopes sont répartis entre trois réseaux, deux réseaux dans deux plans perpendiculaires (10, 20) dont l'intersection défini une direction de référence (40) formant un angle zénithal ALPHA. Les télescopes du premier réseau (11 à 13) et du deuxième réseau (21 à 23) sont répartis pour couvrir la totalité de deux arcs (15, 25) s'étendant sur environ 120°, les parties les plus bases de part et d'autre de la direction de référence (40) étant constitués d'un masque s'élevant sur une trentaine de degrés.

Le troisième réseau est formé d'une série de télescopes (31 à 33) observant une couronne azimutale (30).

La direction de référence (40) permettant d'assurer l'immobilité des objets stellaires. Cette direction de référence (40) peut être épisodiquement modifiée, les télescopes étant alors réalignés en fonction de la nouvelle direction de référence (40). Cette architecture de télescopes permet de déterminer les trajectoires des objets sans couvrir la voute céleste.

Les trajectoires sont établies par mesure des trainées d'images établies par l'intersection de l'objet avec un des trois réseaux de télescopes.

## Revendications

1. - Système de détection de la trajectoire (100) d'objets mobiles comportant :
- Un premier réseau de N1 télescopes (11 à 13) ayant chacun une orientation, un angle de champ de M1 degrés et un angle de visée ALPHAN1 et un axe de visée d'un objet de référence, orientés pour couvrir un arc de C° dans un plan P1 (10), M1 étant compris entre 1 et 4°, N1 étant supérieur à C/M1, lesdits angles de visés ALPHAN1 de chacun desdits télescopes (11 à 13) étant dans ledit plan P1 (10)
- Au moins un deuxième réseau de N2 télescopes (21 à 23) ayant chacun un angle de champ de M2 degrés, orientés pour couvrir un arc de C° dans un plan P2 (20), M2 étant compris entre 1 et 4°, N2 étant supérieur à C/M1, les angles de visés ALPHAN1 de chacun desdits télescopes étant dans ledit plan P2 (20) perpendiculaire au plan P1 (10) comprenant ledit axe de visée d'un objet stellaire de référence
- Ladite orientation desdits télescopes (11 à 13, 21 à 23) étant pilotée pour maintenir l'intersection entre lesdits plans P1 et P2 étant dans l'axe d'un objet de référence
- Au moins un troisième réseau de N3 télescopes (31 à 33) observant une couronne azimutale (30), ayant chacun un angle de champ de M3 degrés, orientés pour couvrir un segment conique de 360° ;
- Chacun des télescopes (11 à 13, 21 à 23, 31 à 33) étant muni d'un capteur photosensible délivrant périodiquement une image I,
- le système comprenant en outre un calculateur exécutant
∘ pour chacune desdites images I un traitement de reconnaissance les coordonnées d'un segment Sᵢ (T, H, CS) correspondant à un déplacement d'un objet dans le champ du télescope T correspondant, où la variable H désigne l'horodatage de l'image et CS désigne les cordonnées dudit segment dans ladite image
∘ un traitement appliqué sur l'ensemble desdits segments enregistrés pour estimer les trajectoires (100) desdits objets.

2. - Système de détection de la trajectoire (100) d'objets mobiles selon la revendication 1 **caractérisé en ce que** ledit troisième réseau est constitué de N3 télescopes (31 à 33), ayant chacun un angle de champ de M3 degrés, orientés pour couvrir un segment conique de 360° avec une élévation E3 de ((180 - C)/2)°, M3 étant compris entre 1 et 4°, N3 étant supérieur à 360/M3.

3. - Système de détection de la trajectoire (100) d'objets mobiles selon la revendication 1 ou 2 **caractérisé en ce que** lesdites trajectoires sont établies par mesure des trainées d'images établies par l'intersection de l'objet avec un des trois réseaux de télescopes.

4. - Système de détection de la trajectoire (100) d'objets mobiles selon la revendication 1 ou 2 **caractérisé en ce que** lesdits télescopes sont des télescopes de Schmidt.

5. - Système de détection de la trajectoire (100) d'objets mobiles selon la revendication 2 **caractérisé en ce que** télescopes sont répartis entre trois réseaux, deux réseaux dans deux plans perpendiculaires (10, 20) dont l'intersection défini une direction de référence (40) formant un angle zénithal ALPHA et **en ce que** les télescopes du premier réseau (11 à 13) et du deuxième réseau (21 à 23) sont répartis pour couvrir la totalité de deux arcs (15, 25) s'étendant sur environ 120°, les parties les plus bases de part et d'autre de la direction de référence (40) étant constitués d'un masque s'élevant sur une trentaine de degrés.

## Patentansprüche

1. System zur Erfassung des Weges (100) von sich bewegenden Objekten, umfassend:
- ein erstes Netzwerk aus N1-Teleskopen (11 bis 13), die jeweils eine Ausrichtung, einen Gesichtsfeldwinkel von M1 Grad und einen Visierwinkel ALPHAN1 sowie eine Visierachse auf ein Referenzobjekt aufweisen und so ausgerichtet sind, dass sie einen Bogen von C° in einer Ebene P1 (10) abdecken, wobei M1 zwischen 1 und 4° liegt, N1 größer als C/M1 ist und die Visierwinkel ALPHAN1 jedes der Teleskope (11 bis 13) in der Ebene P1 (10) liegen,
- mindestens ein zweites Netzwerk aus N2-Teleskopen (21 bis 23), die jeweils einen Gesichtsfeldwinkel von M2 Grad aufweisen und so ausgerichtet sind, dass sie einen Bogen von C° in einer Ebene P2 (20) abdecken, wobei M2 zwischen 1 und 4° liegt, N2 größer als C/M1 ist und die Visierwinkel ALPHAN1 jedes der Teleskope in der Ebene P2 (20) liegen, die schräg zur Ebene P1 (10) verläuft und die Visierachse eines Referenzobjekts in Sternform umfasst,
- wobei die Ausrichtung der Teleskope (11 bis 13, 21 bis 23) so gesteuert ist, dass der Schnittpunkt zwischen den Ebenen P1 und P2 auf der Achse eines Referenzobjekts liegt,
- mindestens ein drittes Netzwerk aus N3-Teleskopen (31 bis 33), die eine azimutale Korona (30) beobachten, jeweils einen Gesichtsfeldwinkel von M3 Grad aufweisen und so ausgerichtet sind, dass sie ein konisches Segment von 360° abdecken;
- wobei jedes der Teleskope (11 bis 13, 21 bis 23, 31 bis 33) mit einem lichtempfindlichen Sensor ausgestattet ist, der periodisch ein Bild I liefert,
- wobei das System außerdem einen Rechner umfasst, der ausführt,
o für jedes der Bilder I, eine Verarbeitung zur Erkennung der Koordinaten eines Segments Sᵢ (T, H, CS), das einer Verschiebung eines Objekts im Feld des entsprechenden Teleskops T entspricht, wobei die Variable H den Zeitstempel des Bildes und CS die Koordinaten des Segments in diesem Bild bezeichnet,
o eine Verarbeitung, die auf alle aufgezeichneten Segmente angewendet wird, um die Wege (100) der Objekte zu schätzen.

2. System zur Erfassung des Weges (100) von sich bewegenden Objekten nach Anspruch 1, **dadurch gekennzeichnet, dass** das dritte Netzwerk aus N3-Teleskopen (31 bis 33) besteht, die jeweils einen Gesichtsfeldwinkel von M3 Grad aufweisen und so ausgerichtet sind, dass sie ein konisches Segment von 360° mit einer Elevation E3 von ((180 - C)/2)° abdecken, wobei M3 zwischen 1 und 4° liegt und N3 größer als 360/M3 ist.

3. System zur Erfassung des Weges (100) von sich bewegenden Objekten nach Anspruch 1 oder 2, **dadurch gekennzeichnet, dass** die Wege durch Messung der Bildspuren ermittelt werden, die durch den Schnittpunkt des Objekts mit einem der drei Teleskopnetze entstehen.

4. System zur Erfassung des Weges (100) von sich bewegenden Objekten nach Anspruch 1 oder 2, **dadurch gekennzeichnet, dass** es sich bei den Teleskopen um Schmidt-Teleskope handelt.

5. System zur Erfassung des Weges (100) von sich bewegenden Objekten nach Anspruch 2, **dadurch gekennzeichnet, dass** die Teleskope auf drei Netzwerke verteilt sind, wobei zwei Netzwerke in zwei senkrechten Ebenen (10, 20) angeordnet sind, deren Schnittpunkt eine Referenzrichtung (40) definiert, die einen Zenitwinkel ALPHA bildet, und dass die Teleskope des ersten Netzwerks (11 bis 13) und des zweiten Netzwerks (21 bis 23) so verteilt sind, dass sie zwei Bögen (15, 25) mit einer Ausdehnung von etwa 120° vollständig abdecken, wobei die untersten Bereiche beiderseits der Referenzrichtung (40) aus einer Maske bestehen, die sich über etwa dreißig Grad erstreckt.

## Claims

1. A system for detecting the path (100) of moving objects having:
• A first network of N1 telescopes (11 to 13) each having an orientation, a field angle of M1 degrees and an observation angle ALPHAN1 and an observation axis of a reference object, oriented so as to cover an arc of C° in a plane P1 (10), M1 being between 1 and 4°, N1 being greater than C/M1, said observation angles ALPHAN1 of each of said telescopes (11 to 13) being in said plane P1 (10)
• At least a second network of N2 telescopes (21 to 23) each having a field angle of M2 degrees, oriented to cover an arc of C° in a plane P2 (20), M2 being between 1 and 4°, N2 being greater than C/M1, the observation angles ALPHAN1 of each of said telescopes being in said plane P2 (20) perpendicular to the plane P1 (10) comprising said observation axis of a reference stellar object
• Said orientation of said telescopes (11 to 13, 21 to 23) being controlled in order to maintain the intersection between said planes P1 and P2 being in the axis of a reference object
• At least one third network of N3 telescopes (31 to 33) observing an azimuth ring (30), each having a field angle of M3 degrees, oriented so as to cover a conical segment of 360°;
• Each of the telescopes (11 to 13, 21 to 23, 31 to 33) being provided with a photosensitive sensor which periodically supplies an image I,
• the system further comprising a computer executing
∘ for each of said images I, a processing operation for recognising the coordinates of a segment Sᵢ (T, H, CS) corresponding to a movement of an object in the field of the corresponding telescope T, where the variable H denotes the timestamp of the image and CS denotes the coordinates of said segment in said image
∘ a processing operation applied to all of said recorded segments for estimating the paths (100) of said objects.

2. The system for detecting the path (100) of moving objects according to claim 1, **characterised in that** said third network consists of N3 telescopes (31 to 33), which each have a field angle of M3 degrees, oriented to cover a conical segment of 360° with an elevation E3 of ((180 - C)/2)°, M3 being between 1 and 4°, N3 being greater than 360/M3.

3. The system for detecting the path (100) of moving objects according to claim 1 or 2, **characterised in that** said paths are established by measuring the image trails established by the intersection of the object with one of the three telescope networks.

4. The system for detecting the path (100) of moving objects according to claim 1 or 2, **characterised in that** said telescopes are Schmidt telescopes.

5. The system for detecting the path (100) of moving objects according to claim 2, **characterised in that** telescopes are distributed between three networks, two networks in two perpendicular planes (10, 20), the intersection of which defines a reference direction (40) forming a zenith angle ALPHA and **in that** the telescopes of the first network (11 to 13) and the second network (21 to 23) are distributed to cover the entirety of two arcs (15, 25) extending over about 120°, the lowest parts on either side of the reference direction (40) consisting of a mask rising over about thirty degrees.
